# DEMANDE DE BREVET EUROPEEN

(11) **EP 3 672 259 A1**
(43) Date de publication de la demande: **24.06.2020**
(21) Numéro de dépôt: 19216848.2
(22) Date de dépôt: 17.12.2019
(51) Int. Cl.: H04N 21/24, H04N 21/442, H04N 21/4425, H04N 21/647, G06N 20/00

(54) **PROCEDE DE DETECTION AUTOMATIQUE D'INCIDENTS VIDEO SUR UN DISPOSITIF ELECTRONIQUE DE RESTITUTION VIDEO**

(30) Priorité: 21.12.2018 FR 1873918
(71) Demandeur: SAGEMCOM BROADBAND SAS, 92500 Rueil-Malmaison (FR)
(72) Inventeur: LANDAIS, Thomas, 92500 RUEIL MALMAISON (FR)
(74) Mandataire: Cabinet Camus Lebkiri

(57) **Abrégé**

Un aspect de l'invention concerne un procédé de détection automatique d'incident vidéo sur une vidéo restituée par un dispositif électronique de restitution vidéo caractérisé en ce qu'il comprend :
- Une étape d'acquisition d'un message ;
- Une étape de soustraction d'un compteur compris dans le message précédemment acquis à un compteur compris dans un message sauvegardé dans une base de données pour obtenir un état de transition du dispositif électronique de restitution vidéo ;
- Une étape de classification par un algorithme d'apprentissage automatique supervisé de l'état de transition comme état normal de la vidéo restituée, ou comme incident vidéo sur la vidéo restituée ;
- Une étape de détection d'incident vidéo comprenant la création d'un message d'incident ;
- Une étape de transmission du message d'incident à un système distant ;
- Une étape d'enregistrement dans la base de données du message acquis.

## Description

### DOMAINE TECHNIQUE DE L'INVENTION

Le domaine technique de l'invention est celui de la restitution vidéo. La présente invention concerne un procédé de détection automatique d'incidents vidéo d'une vidéo restituée par un dispositif électronique de restitution vidéo. Elle concerne également un dispositif électronique de restitution vidéo mettant en œuvre ce procédé, en particulier par la mise en œuvre d'un algorithme d'apprentissage automatique pour réaliser la détection.

### ARRIERE-PLAN TECHNOLOGIQUE DE L'INVENTION

Les utilisateurs de dispositifs électronique de restitution vidéo peuvent rencontrer des problèmes dits incidents vidéo lors de la restitution d'une vidéo sur un écran, par exemple: gels d'image (« freeze » selon la dénomination anglo-saxonne), écrans noirs (« blackscreen » selon la dénomination anglo-saxonne), micro-gels d'images (aussi appelé pixellisation en français, et « pixelisation » ou « micro-freeze » selon les dénominations anglo-saxonne).

On entend par « dispositif électronique de restitution vidéo » tout dispositif électronique permettant de restituer sous forme vidéo sur un écran un contenu vidéo à partir d'un signal extérieur. On désignera par exemple par « dispositif électronique de restitution vidéo » un boîtier décodeur, aussi appelé décodeur TV, qui reçoit un signal crypté ou compressé pour la télévision, le décode en le décryptant et/ou en le décompressant et le restitue sur un écran. Pour un tel boîtier décodeur, on pourra aussi utiliser la dénomination anglo-saxonne de « set-top box ». On pourra aussi désigner par « dispositif électronique de restitution vidéo » une « video sound box », un téléphone mobile ou encore une tablette électronique.

Un dispositif électronique de restitution vidéo restitue sur un écran un contenu à partir d'un signal extérieur pouvant provenir par exemple :
- D'une antenne satellite ou d'une antenne UHF(Ultra Haute Fréquence)/VHF(Très Haute Fréquence)
- D'un réseau public ou local via une ligne téléphonique, une fibre optique ou un câble Ethernet
- D'un moyen de stockage connecté en USB, SATA, Bluetooth ou Wifi au dispositif tel qu'une clé USB, un disque dur ou un autre dispositif électronique.

Les incidents vidéo cités précédemment peuvent avoir des origines diverses : détérioration du signal lors de sa transmission sur le réseau, débit trop faible, problèmes matériel du dispositif électronique de restitution vidéo (problème de câble reliant le dispositif au réseau ou de câble reliant le dispositif à l'écran ...).

Pour détecter ces incidents vidéo, plusieurs systèmes sont proposés dans l'art antérieur. Une première solution consiste à analyser directement le flux vidéo transmis par le dispositif électronique de restitution vidéo à l'écran. Ces systèmes peuvent être très précis et détecter beaucoup d'incidents vidéo différents, et sont agnostiques du dispositif de restitution utilisé. Cependant, ces systèmes, pratiquant du traitement d'image sur le flux vidéo, demandent beaucoup de ressources, et ne permettent pas de remonter à la source de l'incident. En effet, le traitement est effectué sur le résultat final et non en amont.

Afin de remonter à la source d'un incident, d'autres systèmes analysent le réseau de diffusion de contenu (« RDC » ou « CDN » selon la dénomination anglo-saxonne « Content Delivery Network »). Cependant, ces systèmes ne permettent que de détecter des gels d'écran (« freeze ») qui proviennent uniquement d'un problème sur le réseau. Ces systèmes demandent moins de ressource que le traitement du flux vidéo final, mais ne permettent de détecter qu'un type d'incident, ne provenant que d'un type de problème : les problèmes réseau.

Il apparaît donc nécessaire de détecter différents types d'incidents vidéo et de pouvoir remonter à leur cause, qu'elle soit un problème réseau, un problème matériel du dispositif de restitution vidéo, ou un problème logiciel du dispositif de restitution vidéo, tout en demandant peu de ressources.

### RESUME DE L'INVENTION

L'invention offre une solution aux problèmes évoqués précédemment, en permettant une détection automatique d'incidents vidéo d'une vidéo restituée sur un écran par un dispositif électronique de restitution vidéo demandant peu de ressources, permettant de détecter différents types d'incidents vidéo et de pouvoir remonter à leur cause qu'elle soit un problème réseau, un problème matériel du dispositif de restitution vidéo, ou un problème logiciel du dispositif de restitution vidéo.

Pour cela, un aspect de l'invention concerne un procédé de détection automatique d'incident vidéo sur une vidéo restituée par un dispositif électronique de restitution vidéo caractérisé en ce qu'il comprend :
- Une étape d'acquisition d'un message émis par le dispositif électronique de restitution vidéo (500), ledit message comprenant au moins un compteur représentant l'état du dispositif électronique de restitution vidéo ;
- Une étape de soustraction du au moins un compteur compris dans le message précédemment acquis à au moins un compteur compris dans un message sauvegardé dans une base de données correspondant à un état précédent du dispositif électronique de restitution vidéo pour obtenir un état de transition du dispositif électronique de restitution vidéo ;
- Une étape de classification, par un algorithme d'apprentissage automatique supervisé utilisant un modèle de classification, de l'état de transition comme appartenant à une classe représentative d'un état normal de la vidéo restituée, ou comme appartenant à une classe parmi au moins une classe représentative d'un incident vidéo sur la vidéo restituée ;
- Une étape de détection d'incident vidéo comprenant la création d'un message d'incident lorsqu'un état de transition est classifié comme appartenant à une classe représentative d'un incident vidéo sur la vidéo restituée, ledit message d'incident comprenant un label correspondant à l'incident vidéo détecté, ledit état de transition et ledit message acquis ;
- Une étape de transmission du message d'incident à un système distant ;
- Une étape d'enregistrement dans la base de données du message précédemment acquis.

L'invention permet avantageusement, en positionnant la détection d'incidents vidéo au niveau du dispositif de restitution vidéo, de pouvoir remonter à la cause de l'incident, qu'elle soit un problème réseau, un problème matériel du dispositif de restitution vidéo, ou un problème logiciel du dispositif de restitution vidéo. En effet, le dispositif de restitution vidéo est avantageusement situé en bordure du réseau de distribution de contenu la détection, directement relié à l'écran, il permet donc d'identifier l'utilisateur subissant les incidents vidéo, ainsi que l'état des différents modules du dispositif au moment où l'incident a été subi, et donc de détecter les problèmes qu'ils soient des problèmes réseau, des problèmes internes au dispositif ou encore des problèmes liés au flux vidéo.

De plus, la détection est réalisée via un algorithme d'apprentissage automatique supervisé, qui classifie les états du dispositif de restitution. Un état du dispositif est représenté par des compteurs, provenant d'un fichier d'événement (fichier dit « log ») du dispositif ou d'un message émis par le dispositif. Ainsi, grâce à l'utilisation de ces compteurs, il est possible de définir un état du dispositif lorsqu'un incident a été détecté.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- Le procédé est répété au moins deux fois.
- La répétition du procédé est effectuée à intervalles de temps fixe.
- La répétition du procédé est effectuée à intervalles de temps variable.
- Le procédé comprend en outre une étape de réduction de dimensionalité du message comprenant la réduction du nombre de compteurs compris dans le message.
- Le procédé comprend en outre :
   - Une étape d'entraînement de l'algorithme d'apprentissage automatique supervisé pour créer un modèle de classification, en utilisant un jeu de données d'entraînement comprenant au moins un message annoté comme appartenant à une classe représentative d'un état normal de la vidéo restituée, ou comme appartenant à une classe parmi au moins une classe représentative d'un incident vidéo sur la vidéo restituée, le message comprenant au moins un compteur ;
   - Une étape de test du modèle de classification en utilisant un jeu de données de test comprenant au moins un message non annoté.
- Le procédé est caractérisé en ce que l'algorithme d'apprentissage automatique supervisé est un algorithme d'un type parmi ceux de boosting de gradient d'arbres, de Machines à Vecteurs de Support, de réseau de neurones, d'arbres de décision.
- Le procédé est mis en œuvre par au moins un système distant du dispositif électronique de restitution vidéo.

Un autre aspect de l'invention concerne un dispositif électronique de restitution vidéo mettant en œuvre le procédé comprenant :
- Un module d'acquisition et de soustraction d'un message, configuré pour réaliser les étapes d'acquisition du message et de soustraction ;
- Un module de classification configuré pour réaliser les étapes de classification, de détection d'incident; et de transmission du message d'incident ;
- Un module d'enregistrement de modèle, configuré pour stocker le modèle de classification ;
- Un module d'enregistrement de message configuré pour réaliser l'étape d'enregistrement de message.

Un autre aspect de l'invention concerne un système de détection d'incident vidéo caractérisé en ce qu'il comprend le dispositif électronique de restitution vidéo et un système distant de réception et d'affichage de message d'incident comprenant :
- Un module d'enregistrement de message d'incident ;
- Un module d'affichage de message d'incident sur un écran pour analyse par un expert métier.

Un autre aspect de l'invention concerne un produit programme d'ordinateur comprenant des instructions qui, lorsque le programme est exécuté par un ordinateur, conduisent celui-ci à mettre en œuvre le procédé.

Un autre aspect de l'invention concerne un support d'enregistrement lisible par ordinateur comprenant des instructions qui, lorsqu'elles sont exécutées par un ordinateur, conduisent celui-ci à mettre en œuvre le procédé.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La Figure 1 montre une représentation schématique d'un premier mode de réalisation d'un procédé selon l'invention.
- La Figure 2 montre une représentation schématique temporelle du premier mode de réalisation du procédé selon l'invention.
- La Figure 3 montre une représentation schématique d'un second mode de réalisation du procédé selon l'invention.
- La Figure 4 montre une représentation schématique temporelle du second mode de réalisation du procédé selon l'invention.
- La Figure 5 montre une représentation schématique d'un premier mode de réalisation d'un système de détection d'incidents vidéo.
- La Figure 6 montre une représentation schématique d'un premier mode de réalisation d'un système d'entraînement d'un algorithme de détection d'incidents vidéo.
- La Figure 7 montre une représentation schématique d'un second mode de réalisation d'un système d'entraînement d'un algorithme de détection d'incidents vidéo.
- La Figure 8 montre une représentation schématique d'un deuxième mode de réalisation d'un système de détection d'incidents vidéo.

### DESCRIPTION DETAILLEE D'AU MOINS UN MODE DE REALISATION DE L'INVENTION

Sauf précision contraire, un même élément apparaissant sur des figures différentes présente une référence unique.

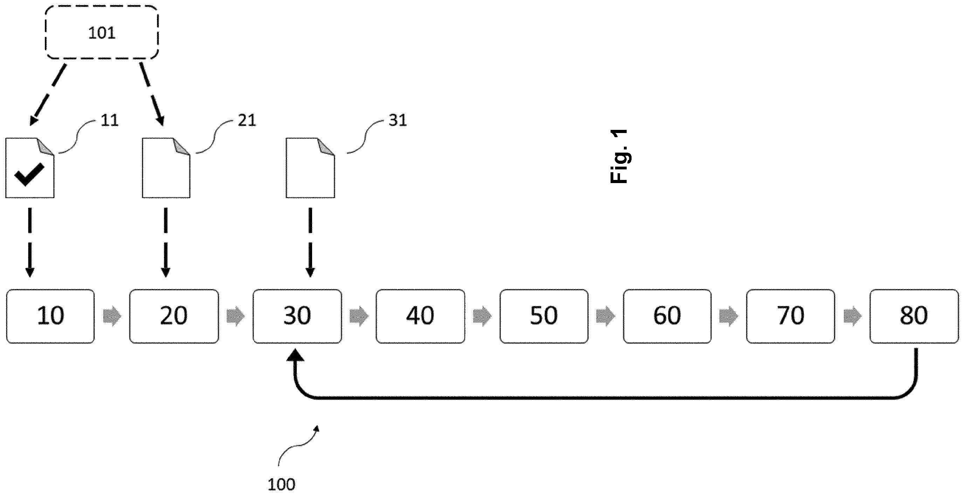

[Fig 1] représente un mode de réalisation du procédé de détection d'incident vidéo d'une vidéo restituée par un dispositif électronique de restitution vidéo.

Le procédé 100 de détection automatique d'incident vidéo comprend une étape 10 d'entraînement d'un algorithme d'apprentissage automatique supervisé, une étape 20 de test d'un modèle estimé, une étape 30 d'acquisition d'un message, une étape 40 de soustraction d'un compteur compris dans le message acquis à un compteur compris dans un message enregistré dans une base de données correspondant à l'avant-dernier message acquis pour obtenir un état de transition, une étape 50 de classification de l'état de transition, une étape 60 de détection d'incident vidéo, une étape 70 de transmission du message d'incident et une étape 80 d'enregistrement du message acquis dans une base de données.

La première étape 10 d'entraînement d'un algorithme d'apprentissage automatique supervisé comprend la création d'un modèle de classification, et le stockage de ce modèle.

On entend par « algorithme d'apprentissage automatique supervisé » un algorithme d'optimisation capable d'estimer un modèle à partir de données sélectionnées en nombre fini, puis d'utiliser le modèle estimé pour réaliser une tâche en prenant en entrée des données non sélectionnées. Dans l'invention, la tâche à réaliser est la classification de messages. Un tel algorithme est dit « supervisé » lorsque les données sélectionnées et fournies en entrée de l'algorithme lors de la phase d'entraînement sont annotées. Dans l'invention, lors de l'étape 10 d'entraînement, des messages déjà classés 11 (c'est-à-dire annotés comme appartenant à une classe) sont fournis en entrée de l'algorithme.

Les messages annotés 11 comprennent des compteurs. Ces compteurs sont déjà existants au sein du dispositif électronique de restitution vidéo. Par « compteur », on entend une variable prenant une valeur permettant de représenter l'état du dispositif. Lorsqu'un événement arrive, un compteur peut être incrémenté. Par exemple, lors de la perte d'un signal, un compteur appelé « signal_lost » peut être incrémenter par le dispositif de restitution vidéo, permettant de garder une trace du nombre de fois où un signal a été perdu. On peut aussi par exemple avoir un compteur qui garde en mémoire un numéro de session, permettant de lier un autre compteur à la session durant laquelle l'événement a eu lieu.

Par exemple, le message peut être au format JSON ou un autre format de données utilisant un formalisme dit « clé - valeur » et peut contenir les compteurs suivants :

```
 "fe": {
 "signal_lost": 0,
 "signal_recovered": 0,
 "signal_low": 0
 }
```

Ces compteurs permettent, grâce au recensement du nombre d'événements liés au signal, de représenter l'état du signal reçu, et donc de remonter à des problèmes liés au réseau par lequel le signal est reçu.

```
 "video": {
 "changed": 0,
 "io_changed": 0,
"ar_changed": 0,
"eotf_changed": 0,
 "not_found": 0,
"error_format": 0,
 "removed": 0}
```

Ces compteurs permettent, grâce au recensement du nombre d'événements liés à la vidéo, de représenter l'état de la vidéo restituée, et donc de remonter à des problèmes liés au traitement du signal reçu par le dispositif pour le restituer sous forme vidéo.

```
 "resources": {
 "priority_updated": 0,
 "error": 0,
 "busy": 0,
 "no_resources": 0,
 "ok": 0,
 "earned": 0,
 "lost": 0,
 "released": 0}
```

Ces compteurs permettent, grâce au recensement du nombre d'événements liés aux ressources du dispositif, de représenter l'état du dispositif en termes de matériel (« busy » indique par exemple qu'une partie matérielle du dispositif est occupée) et donc de remonter à des problèmes liés au matériel.

Ces exemples de compteurs ne sont nullement limitatifs et il est possible de choisir un plus grand nombre de compteurs pour avoir une précision plus élevée quant à l'origine d'un incident, ce qui entraînera un plus grand nombre de données à traiter. Il est aussi possible de choisir un plus petit nombre de compteurs pour avoir moins de données à traiter, ce qui entraînera une précision moindre.

Les messages annotés 11 se sont vu attribuer une classe, par exemple par un opérateur. Dans l'invention, on entend par « annoter un message » la création d'un nouveau message comprenant le message à annoter et une étiquette (ou « label ») comprenant le nom de la classe attribuée au message. Les classes ont été choisies parmi les suivantes : une classe « état normal », représentative d'un état normal de la vidéo restituée. Le message a été annoté par un opérateur par exemple, comme correspondant à un état normal de la vidéo restituée, c'est-à-dire que l'opérateur n'a pas décelé d'incident dans la vidéo restituée ou qu'il a décelé des incidents sous un seuil d'acceptabilité qu'il aura déterminé. Par exemple, il peut avoir remarqué un micro-freeze (petite zone de pixels gelés sur l'écran), et décider que cet incident appartenait à une classe « état normal » de la vidéo restituée, en fonction d'une précision de détection qu'il aura fixé. Il peut aussi décider que cet incident appartient à une classe « micro-freeze », pour plus de précision dans la détection d'incidents. Dans l'invention, plusieurs classes représentatives d'un incident sur la vidéo restituée peuvent exister conjointement. Par exemple, de manière non limitative, il peut exister les classes d'incident « micro-freeze », « freeze » (lorsque l'écran est gelé en proportion importante, par exemple sur la moitié de l'écran ou sa totalité) et « blackscreen » (lorsqu'il n'y a pas d'image à l'écran). Ces exemples sont non limitatifs car il peut exister de nombreuses classes d'incidents en fonction des incidents vidéo que l'on cherche à détecter.

Lors de l'étape 10 d'entraînement, l'algorithme d'apprentissage automatique supervisé reçoit donc en entrée des données annotées 11, provenant d'un jeu de données 101, les données d'entraînement 11 comprenant un message comprenant des compteurs et un label de classe défini par exemple par un opérateur selon le formalisme expliqué précédemment.

L'algorithme d'apprentissage automatique supervisé peut être par exemple de type « Boosting de Gradient ». Le « Boosting » est une technique d'agrégation de modèles, chaque modèle ayant été créé lors d'une étape d'entraînement et le poids de chacun des modèles agrégés par le modèle final étant corrigé à chaque itération d'entraînement. Par exemple, dans le cas du Boosting d'arbres de décision, chacun des modèles est un arbre de décision « faible ». Un modèle est dit « faible » lorsque la probabilité de succès sur une prévision est légèrement supérieure à celle d'un choix aléatoire. La technique du Boosting filtre les données d'entraînement reçues : les données d'entraînement simples à traiter sont laissées aux modèles faibles déjà existants, et d'autres modèles faibles sont créés pour classifier les données d'entraînement résiduelles que les modèles existants ne savent pas traiter. A l'itération d'entraînement suivante, les données d'entraînement résiduelles de l'itération précédente ne seront plus résiduelles puisqu'un modèle faible aura été créé pour les traiter. Le modèle final agrège tous les modèles faibles. Dans le cas du Boosting d'arbres de décision, c'est un arbre de décision complexe créé à partir d'arbres de décision simples. Le poids de chacun des modèles faibles dans le modèle fort est réévalué à chaque itération de l'étape d'entraînement en fonction des performances de classement de chacun des modèles faibles.

Dans un algorithme d'apprentissage automatique supervisé, on cherche à optimiser (maximiser ou minimiser en fonction des cas) la fonction objectif (selon la dénomination anglo-saxonne « loss function »). Cette fonction compare la sortie prédite par l'algorithme à la sortie attendue (le label). Cette fonction est optimisée en jouant sur les paramètres du modèle. Dans le cas d'un algorithme de Boosting d'arbres de décision, les paramètres sont par exemple le nombre d'arbres « faibles » et leur taille, la taille de l'arbre « fort » ou encore le poids de chacun des arbres faibles au sein de l'arbre fort. Le terme « gradient » dans « Gradient Boosting » se réfère à l'utilisation d'une descente de gradient pour optimiser la fonction objectif. L'ajout d'un arbre « faible » pour traiter les données d'entraînement résiduelles doit donc suivre une descente de gradient de la fonction objectif pour l'optimiser. Si ajouter un arbre faible ne revient pas à réaliser une descente de gradient sur la fonction objectif, alors l'arbre faible n'est pas ajouté.

Une implémentation de l'algorithme de Boosting de gradient d'arbres peut être utilisée, telle que « XGBoost » pour « eXtreme Gradient Boosting » décrit dans [*« XGBoost: A Scalable Tree Boosting System », Tianqi Chen et Carlos Guestrin, arXiv:1603.02754*].

D'autres algorithmes d'apprentissage automatique supervisé peuvent être utilisés, dans une variante moins avantageuse, par exemple des réseaux de neurones, des arbres de décisions simples, des Machines à Vecteurs de Support (« SVM » selon la dénomination anglo-saxonne « Support Vector Machine »), la méthode des k plus proche voisins (« KNN » selon la dénomination anglo-saxonne « k-nearest neighbors »).

Lorsqu'un modèle a été créé à partir des données d'entraînement 11, le modèle est sauvegardé pour être utilisé dans les étapes suivantes.

Dans une étape 20 de test, on teste la robustesse du modèle estimé avec des données de test 21, provenant du même jeu de données 101 que les données d'entraînement. Le modèle estimé se voit proposé en entrée des messages non annotés 21, et la prédiction du modèle est comparée avec la sortie attendue. La robustesse du modèle sera alors évaluée par un expert métier, c'est-à-dire que le nombre de faux positifs (données de test classées comme n'appartenant pas à la classe « état normal » de la vidéo restituée alors qu'elles y appartiennent) et de faux négatifs (données de test classées comme appartenant à la classe « état normal » de la vidéo restituée alors qu'elles n'y appartiennent pas) ne devra pas dépasser pas un certain seuil fixé par l'expert.

Une étape 30 d'acquisition de messages comprend l'acquisition d'un message ou d'un fichier d'événement du dispositif électronique de restitution vidéo comprenant au moins un compteur. Cette acquisition peut par exemple être effectuée en recevant un message comprenant des compteurs du dispositif électronique de restitution vidéo, ou en envoyant une requête pour obtenir ces compteurs. Cette étape 30 d'acquisition de messages peut comprendre une sous-étape non représentée de réduction de dimensionalité, comprenant la réduction du nombre de compteurs du message. Cette réduction de dimensionalité peut être réalisée par exemple en utilisant une Analyse en Composantes Principales, permettant de transformer les caractéristiques (qui sont corrélées entre elles puisque liées aux mêmes événements) en nouvelles caractéristiques décorrélées les unes des autres, ou en utilisant toute autre technique de réduction de dimensionalité de matrice connue de l'homme du métier telles que l'analyse discriminante linéaire, l'analyse canonique des corrélations, ou le calcul du F-score de chacun des compteurs.

Une étape 40 de soustraction du au moins un compteur compris dans le message acquis à au moins un compteur compris dans un message enregistré dans une base de données correspondant à l'avant-dernier message acquis est ensuite réalisée. Cette étape permet d'obtenir un état de transition du dispositif électronique de restitution vidéo entre deux message acquis. En effet, il est nécessaire de réaliser la soustraction des compteurs du message acquis (le dernier message acquis) aux compteurs du message acquis précédemment (l'avant-dernier message acquis) pour ne garder que les valeurs qui ont changé pendant l'intervalle de temps écoulé entre deux acquisitions de message. L'ensemble des compteurs dont la valeur a changé représente ainsi un « état de transition » du dispositif électronique de restitution vidéo, et permet de détecter un incident vidéo sur cet intervalle de transition. Si aucun compteur n'est enregistré dans la base de données, c'est-à-dire que si le message acquis est le premier message acquis, on considère que tous les compteurs de l'état précédent sont à une valeur nulle.

Une étape 50 de classification de l'état de transition est réalisée par l'algorithme d'apprentissage automatique précédemment entraîné en utilisant le modèle précédemment estimé à l'étape 10 et testé et validé à l'étape 20. L'algorithme d'apprentissage automatique reçoit en entrée l'état de transition précédemment créé en soustrayant les compteurs compris dans deux messages, et le classifie comme appartenant à une classe représentative d'un état normal de la vidéo restituée, ou comme appartenant à une classe parmi au moins une classe représentative d'un incident vidéo de la vidéo restituée. On entend par « le classifie comme appartenant à une classe », l'ajout d'un label à l'état de transition correspondant à la classe dans laquelle il a été classifié. Par exemple, lorsque l'état de transition est classé comme appartenant à une classe représentative d'un état normal de la vidéo restituée, l'algorithme lui ajoute un label « état normal ». Lorsque l'état de transition est classé comme appartenant à une classe parmi au moins une classe représentative d'un incident vidéo de la vidéo restituée, l'algorithme lui ajoute un label correspondant à la classe d'incident dans laquelle il a été classé.

Une étape 60 de détection d'incident vidéo comprend la création d'un message d'incident lorsque l'état de transition est classé comme appartenant à une classe parmi au moins une classe représentative d'un incident vidéo de la vidéo restituée. Ce message d'incident vidéo peut comprendre l'état de transition correspondant à un état entre deux acquisitions de messages du dispositif de restitution lorsqu'un incident vidéo a été détecté, le message acquis, et un label correspondant à l'incident vidéo détecté.

Une étape 70 de transmission du message d'incident peut comprendre la transmission du message d'incident à un dispositif distant du dispositif électronique de restitution vidéo. Ce dispositif distant peut être par exemple accessible via un réseau. Ce faisant, un opérateur ou un expert métier est en capacité d'analyser l'incident qui a été détecté grâce au label compris dans le message d'incident, et il est capable de remonter au problème à l'origine de l'incident, grâce à l'état de transition compris dans le message d'incident, que le problème soit d'ordre matériel du dispositif de restitution, d'ordre logiciel du dispositif de restitution vidéo, ou encore provenant d'un problème sur le réseau. Le dispositif électronique de restitution vidéo possède en effet avantageusement des connaissances sur tous ces domaines grâce aux compteurs compris dans les messages ou fichiers d'évènements, puisqu'il se situe en bordure de réseau, directement chez l'utilisateur en fin de chaîne de transmission. L'état de transition permet ainsi de remonter toutes ces informations et de les lier par la suite avec un incident détecté.

Dans une étape 80 d'enregistrement, le message acquis est enregistré dans une base de données. Les compteurs compris dans le message sauvegardé permettent de réaliser la soustraction de l'étape 40 des compteurs du message acquis aux compteurs du message sauvegardé pour obtenir un état de transition.

Les étapes 30 à 80 sont répétées au moins deux fois. Cette répétition permet avantageusement de détecter les incidents vidéos de manière régulière et de suivre l'évolution de l'état du dispositif de restitution vidéo. En effet, en ne connaissant qu'un état des compteurs, il n'est pas possible de savoir quand ceux-ci ont été incrémentés précédemment. Pour détecter des incidents vidéo à partir de l'état des compteurs, il est nécessaire de connaître les évolutions d'état des compteurs.

Selon un premier mode de réalisation, cette répétition est effectuée à intervalles réguliers, par exemple à intervalles de 5 secondes. Cet intervalle conditionne le délai de détection, et donc la précision de la détection. Il conditionne aussi la durée des évènements à détecter. En effet, dans le cas d'un intervalle de 5 secondes, un événement de 7 secondes ne sera pas détecté (son compteur ne sera pas incrémenté) dans un premier intervalle de 5 secondes mais dans un second intervalle de 5 secondes (son compteur aura été incrémenté). Si cet événement a un impact négatif sur la vidéo restituée, un incident vidéo ne sera détecté qu'après deux intervalles de 5 secondes, soit au bout de 10 secondes, alors que celui-ci aura peut-être débuté dès le début de l'évènement, soit 10 secondes avant la détection. En effet, l'algorithme d'apprentissage automatique va classifier les messages acquis, il va donc classifier des compteurs et leurs valeurs. Il est donc nécessaire d'adapter cet intervalle fixe à la durée des incidents vidéos que l'on souhaite détecter.

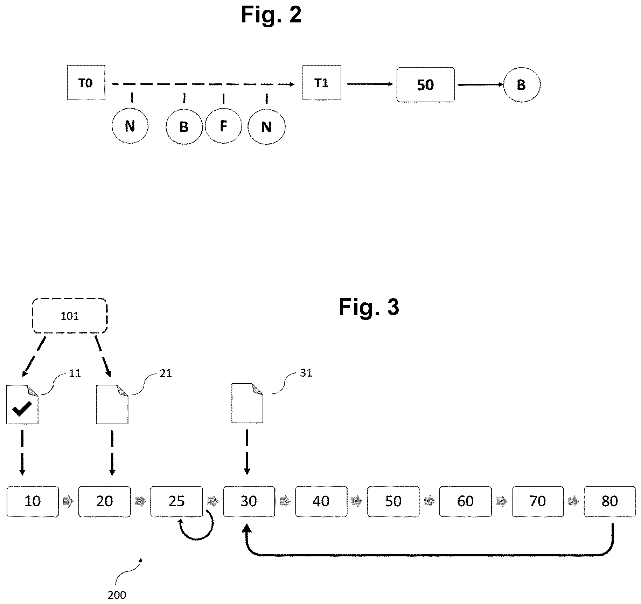

[Fig. 2] représente schématiquement ce premier mode de réalisation à intervalles de temps fixe. Durant l'intervalle T1 - T0, on remarque que quatre évènements ont lieu. Ces évènements sont soit :
- un événement normal (N), c'est-à-dire qu'un ou plusieurs compteurs ont été incrémentés suite à un événement normal (par exemple un début de réception de flux, un changement de la vidéo suite à un changement de chaîne de l'utilisateur)
- un incident « freeze » (F), c'est-à-dire qu'un ou plusieurs compteurs ont été incrémentés suite à un gel de la vidéo restitué.
- un incident « blackscreen » (B), c'est-à-dire qu'un ou plusieurs compteurs ont été incrémentés suite à un écran noir.

Lorsque les compteurs représentant l'état de transition dans l'intervalle T1 - T0 sont classifiés à l'étape 50, le modèle ne détecte qu'un événement. Pour cela, il est nécessaire qu'il connaisse une hiérarchie dans les événements, définie par un expert métier. Par exemple, dans la Figure 2, dans l'intervalle T1 - T0, les évènements « état normal (N) », « blackscreen (B) », « freeze (F) » puis « état normal (N) » s'enchaînent. Cependant, le modèle de classification utilisé par l'algorithme d'apprentissage automatique supervisé à l'étape 50 ne détecte qu'un événement selon, par exemple, la hiérarchie suivante : Blackscreen > Freeze > Normal. On voit donc Figure 2 que le modèle a détecté un écran noir, puisque c'est l'événement qui a l'importance la plus haute dans la hiérarchie. Si, pendant l'intervalle T1 - T0, seuls un gel d'écran (F) et un événement normal (N) avaient eu lieu, le modèle utilisé à l'étape 50 aurait détecté un gel d'écran (F).

[Fig 3] représente un deuxième mode de réalisation comprenant une étape supplémentaire 25 de surveillance des compteurs, qui se répète à haute fréquence pour surveiller l'état des compteurs.

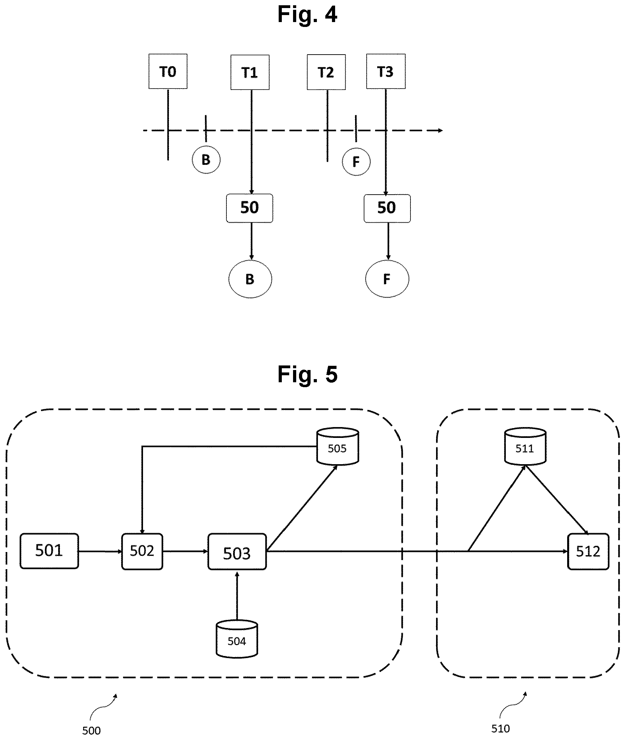

[Fig 4] représente temporellement ce deuxième mode de réalisation, dans lequel cette répétition des étapes 30 à 80 est réalisée à intervalles de temps variable, c'est-à-dire qu'un intervalle entre deux acquisitions ne sera pas forcément égal en temps à un intervalle entre deux autres acquisitions. Cela permet de résoudre les problèmes liés au premier mode de réalisation, moins avantageux, qui ne permet par exemple pas de détecter tous les incidents. S'il y en a plusieurs durant un intervalle fixe, dans le premier mode de réalisation, seul un, celui considéré comme le plus important selon une hiérarchie, sera détecté. Dans ce second mode de réalisation, un intervalle de temps variable optimal est trouvé pour ne pas détecter qu'une partie d'un événement (si un intervalle fixe trop court par rapport à la durée de l'évènement était pris dans le premier mode de réalisation). Pour cela, l'état des compteurs est surveillé à haute fréquence lors de l'étape 25 présentée Figure 3 (par exemple plusieurs fois par secondes). Lorsqu'au moins un compteur commence à s'incrémenter, on définit le début d'un intervalle. Lorsqu'il arrête de s'incrémenter, on définit la fin de l'intervalle. On considère qu'un compteur ou une pluralité de compteurs arrête de s'incrémenter lorsqu'il ne s'est pas incrémenté au bout d'une durée de N cycles d'horloge du dispositif électronique de restitution vidéo, N pouvant être fixé empiriquement en fonction de la précision et de la rapidité de la détection souhaitées. Ainsi, on détecte le début et la fin d'un événement, ce qui permet de détecter un événement dans son ensemble. Une hiérarchie entre les évènements n'est donc plus nécessaire, puisque tous les évènement sont détectés.

Dans la Figure 4, un premier évènement B (écran noir, selon la dénomination anglo-saxonne « blackscreen ») est détecté car au moins un compteur est incrémenté à T0 et arrête d'être incrémenté à T1. Entre T1 et T2, aucun compteur n'est incrémenté, et à T2 au moins un compteur est incrémenté et arrête d'être incrémenté à T3. Les intervalles T1-T0 et T2-T1 peuvent avoir une durée différente ou peuvent être égaux en durée. L'intervalle T2-T1 peut être de durée nulle.

A T1, les compteurs représentant l'état de transition T1-TO sont acquis et classifiés lors de l'étape 50 comme appartenant à une classe d'incident « blackscreen » : un évènement d'écran noir est détecté. A T3, les compteurs représentant l'état de transition T3-T2 sont acquis et classifiés lors de l'étape 50 comme appartenant à une classe d'incident « freeze » : un évènement de gel d'écran est détecté.

[Fig 5] représente un système de détection d'incidents vidéo comprenant un dispositif électronique de restitution vidéo 500 et un système 510 distant de réception et d'analyse de message d'incident.

Le dispositif électronique de restitution vidéo 500 comprend un module 501 de création de messages, un module 502 de réception et de soustraction, un module 503 de classification, un module 504 d'enregistrement de modèle et un module 505 d'enregistrement de message. Le dispositif 500 comprend au moins un calculateur pour traiter des données, une mémoire pour stocker des données, une carte réseau pour recevoir un flux vidéo et une carte graphique pour restituer la vidéo provenant du flux vidéo sur un écran. Le dispositif 500 peut être par exemple une Set top box, une Video Sound Box, un téléphone portable ou une tablette.

Le module 501 de création de messages crée au moins un message comprenant au moins un compteur. Le module 502 de réception et de soustraction est configuré pour réaliser les étapes 30 d'acquisition d'un message et 40 de soustraction du message acquis à un message enregistré du procédé 100. Pour ce faire, le module 502 est connecté au module 501 pour recevoir au moins un message ou pour faire une requête d'au moins un message, et il est connecté au module 505 d'enregistrement de message. Le module 505 d'enregistrement de message est configuré pour réaliser l'étape 80 d'enregistrement d'au moins un message comprenant au moins un compteur. Il comprend par exemple une mémoire et peut être une base de données. Ainsi, le module 502 est capable de soustraire un message reçu du module 501 avec un message enregistré dans le module 505 pour obtenir un état de transition du dispositif 500.

Le module 503 de classification est configuré pour réaliser l'étape 50 de classification de l'état de transition du dispositif 500. Pour ce faire, le module 503 de classification implémente un algorithme d'apprentissage automatique supervisé tel qu'un algorithme de boosting de gradient d'arbres et utilise un modèle de classification stocké par le module 504 d'enregistrement de modèle. Ce modèle a été estimé et validé lors des étapes 10 d'entraînement et 20 de validation du procédé 100.

Le module 503 de classification est configuré en outre pour réaliser l'étape 60 de détection d'incident vidéo comprenant la création d'un message d'incident lorsque l'état de transition est classé comme appartenant à une classe parmi au moins une classe représentative d'un incident vidéo de la vidéo restituée.

Le module 503 de classification est configuré en outre pour réaliser l'étape 70 de transmission de message d'incident à un système 510 distant du dispositif électronique de restitution vidéo 500. Ce système distant 510 peut être par exemple une dispositif électronique accessible via un réseau.

Le module 503 de classification est configuré en outre pour transmettre le message acquis au module 505 d'enregistrement de message, afin que le module 505 d'enregistrement de message enregistre le message acquis.

Le système 510 distant comprend un module d'enregistrement de message d'incident 511 et un module d'affichage de message d'incident 512.

Le module d'enregistrement de message d'incident 511 comprend une mémoire pour enregistrer un message d'incident transmis par le dispositif de classification 503.

Le module d'affichage de message d'incident 512 est configuré pour recevoir le message d'incident transmis par le dispositif de classification 503 et l'afficher sur un écran, afin qu'un expert métier ou un opérateur l'analyse. Le module 512 est en outre configuré pour réaliser une requête de message d'incident au module de stockage 511 afin d'afficher un message d'incident antérieur.

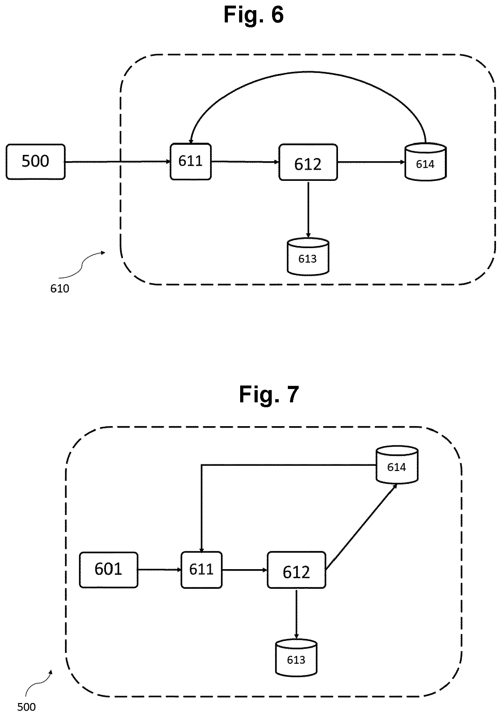

[Fig 6] représente un système d'entraînement d'un algorithme d'apprentissage automatique supervisé afin de créer un modèle de classification.

Le système d'entraînement comprend un dispositif électronique de restitution vidéo 500 et un système d'entraînement 610, et est configuré pour réaliser les étapes 10 d'entraînement et 20 de validation de modèle de classification du procédé 100.

Le dispositif 500 est configuré pour transmettre des messages comprenant un label correspondant à une classe au système d'entraînement 610.

Le système 610 d'entraînement est distant du dispositif 500. Il peut être accessible via un réseau. Il comprend un module de soustraction 611, un module de création de modèle 612, un module d'enregistrement de modèle 613 et un module d'enregistrement de message 614.

Le module de soustraction 611 est configuré pour réaliser la soustraction d'un message annoté reçu du dispositif 600 avec un message annoté enregistré par le dispositif d'enregistrement de message 614.

Le module de création de modèle 612 implémente le même algorithme d'apprentissage automatique supervisé que le module 503 de la Figure 5, par exemple un algorithme de type boosting de gradient d'arbres. Le module 612 de création de modèle reçoit du module de soustraction 611 un état de transition annoté et crée et optimise un modèle qu'il enregistre au fur et à mesure des itérations dans le module d'enregistrement de modèle 613.

Avantageusement, le système 610 est distant du dispositif électronique de restitution vidéo 500 car les étapes 10 et 20 du procédé 100 demandent beaucoup de ressources, dont ne dispose pas forcément le dispositif 500. Le système 610 peut être relié à plusieurs dispositifs 500 afin de recevoir de nombreux messages annotés et d'optimiser au mieux son modèle aux différents incidents et compteurs qu'il pourrait rencontrer.

Les étapes 10 d'entraînement et 20 de validation peuvent être réalisées par le dispositif électronique de restitution vidéo 500 dans une variante non avantageuse représentée Figure 7.

[Fig 7] représente ainsi le dispositif 500 comprenant les modules 611 de soustraction, 612 de création de modèle, 613 d'enregistrement de modèle et 614 d'enregistrement de message annoté. Il comprend aussi le module 501 de création de message représenté à la Figure 5.

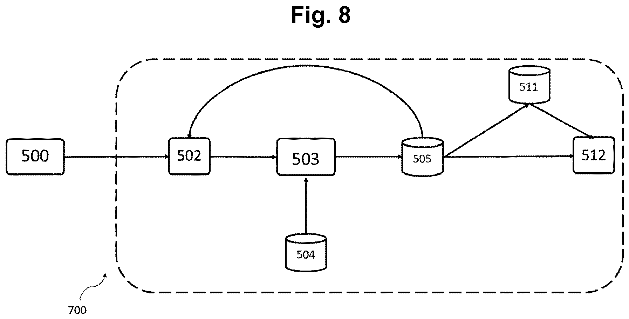

[Fig 8] représente une variante au mode de réalisation selon la Figure 5, où le procédé 100 est réalisé par un système distant du dispositif électronique de restitution vidéo 500. Dans la Figure 7, le dispositif électronique de restitution vidéo 500 envoie au moins un message au système de détection d'incident vidéo distant 700. Le système 700 comprend : le module de soustraction de messages 502, le module de classification 503 implémentant un algorithme d'apprentissage automatique supervisé, le module d'enregistrement de modèle 504, stockant un modèle estimé et validé lors des étapes 10 et 20 du procédé 100, le module 505 de stockage de messages, le module 511 de stockage de message d'incidents, et le module 512 d'affichage de messages d'incidents.

La variante présentée Figure 8 n'est pas la plus avantageuse car elle nécessite d'envoyer chaque message comprenant des compteurs à travers le réseau pour atteindre le système distant 500, tandis que le mode de réalisation selon la Figure 5 ne nécessite que l'envoi de messages d'incidents, lorsqu'un incident vidéo a été détecté, à travers le réseau, résultant en une charge moins importante du réseau reliant le dispositif électronique de restitution vidéo 500 et le système distant 510.

## Revendications

1. Procédé (100) de détection automatique d'incident vidéo sur une vidéo restituée par un dispositif électronique de restitution vidéo (500) **caractérisé en ce qu'**il comprend :
- Une étape d'acquisition (30) d'un message émis par le dispositif électronique de restitution vidéo (500), ledit message comprenant au moins un compteur représentant l'état du dispositif électronique de restitution vidéo (500);
- Une étape de soustraction (40) du au moins un compteur compris dans le message précédemment acquis à au moins un compteur compris dans un message sauvegardé dans une base de données (505) correspondant à un état précédent du dispositif électronique de restitution vidéo (500) pour obtenir un état de transition du dispositif électronique de restitution vidéo (500);
- Une étape de classification (50), par un algorithme d'apprentissage automatique supervisé utilisant un modèle de classification, de l'état de transition comme appartenant à une classe représentative d'un état normal de la vidéo restituée, ou comme appartenant à une classe parmi au moins une classe représentative d'un incident vidéo sur la vidéo restituée ;
- Une étape de détection d'incident vidéo (60) comprenant la création d'un message d'incident lorsqu'un état de transition est classifié comme appartenant à une classe représentative d'un incident vidéo sur la vidéo restituée, ledit message d'incident comprenant un label correspondant à l'incident vidéo détecté, ledit état de transition et ledit message acquis;
- Une étape de transmission (70) du message d'incident à un système distant ;
- Une étape d'enregistrement (80) dans la base de données (505) du message précédemment acquis.

2. Procédé (100) de détection automatique d'incident vidéo selon la revendication 1 **caractérisé en ce qu'**il est répété au moins deux fois.

3. Procédé (100) de détection automatique d'incident vidéo selon la revendication 2 **caractérisé en ce que** la répétition est effectuée à intervalles de temps fixe.

4. Procédé (100) de détection automatique d'incident vidéo selon la revendication 2 **caractérisé en ce que** la répétition est effectuée à intervalles de temps variable.

5. Procédé (100) de détection automatique d'incident vidéo selon l'une quelconque des revendications précédentes **caractérisé en ce qu'**il comprend en outre :
- Une étape de réduction de dimensionalité du message comprenant la réduction du nombre de compteurs compris dans le message.

6. Procédé (100) de détection automatique d'incident vidéo selon l'une quelconque des revendications précédentes **caractérisé en ce qu'**il comprend en outre :
- Une étape d'entraînement (10) de l'algorithme d'apprentissage automatique supervisé pour créer un modèle de classification, en utilisant un jeu de données d'entraînement (11) comprenant au moins un message annoté comme appartenant à une classe représentative d'un état normal de la vidéo restituée, ou comme appartenant à une classe parmi au moins une classe représentative d'un incident vidéo sur la vidéo restituée, le message comprenant au moins un compteur ;
- Une étape de test (20) du modèle de classification en utilisant un jeu de données de test (21) comprenant au moins un message non annoté.

7. Procédé (100) de détection automatique d'incident vidéo selon l'une quelconque des revendications précédentes **caractérisé en ce que** l'algorithme d'apprentissage automatique supervisé est un algorithme d'un type parmi ceux de boosting de gradient d'arbres, de Machines à Vecteurs de Support, de réseau de neurones, d'arbres de décision.

8. Procédé (100) de détection automatique d'incident vidéo selon l'une quelconque des revendications précédentes **caractérisé en ce que** le procédé (100) est mis en œuvre par au moins un système distant (700) du dispositif électronique de restitution vidéo (500).

9. Dispositif électronique de restitution vidéo (500) mettant en œuvre le procédé (100) selon l'une quelconque des revendications 1 à 7 comprenant :
- Un module (502) d'acquisition et de soustraction d'un message, configuré pour réaliser les étapes d'acquisition (30) du message et de soustraction (40);
- Un module (503) de classification configuré pour réaliser les étapes de classification (50), de détection d'incident (60); et de transmission (70) du message d'incident ;
- Un module d'enregistrement de modèle (504), configuré pour stocker le modèle de classification ;
- Un module d'enregistrement de message (505) configuré pour réaliser l'étape d'enregistrement de message (80).

10. Système de détection d'incident vidéo **caractérisé en ce qu'**il comprend le dispositif électronique de restitution vidéo (500) selon la revendication 8 et un système distant (510) de réception et d'affichage de message d'incident comprenant :
- Un module d'enregistrement de message d'incident (511) ;
- Un module d'affichage de message d'incident (512) sur un écran pour analyse par un expert métier.

11. Produit programme d'ordinateur comprenant des instructions qui, lorsque le programme est exécuté par un ordinateur, conduisent celui-ci à mettre en oeuvre le procédé (100) selon l'une quelconque des revendications 1 à 8.

12. Support d'enregistrement lisible par ordinateur comprenant des instructions qui, lorsqu'elles sont exécutées par un ordinateur, conduisent celui-ci à mettre en oeuvre le procédé (100) selon l'une quelconque des revendications 1 à 8.
